Europäisches Patentamt
European Patent Office
Office européen des brevets

(19) (11) Publication number: **0 276 860 A2**

(12) # EUROPEAN PATENT APPLICATION

(21) Application number: 88101256.1

(51) Int. Cl.⁴: C07F 7/18

(22) Date of filing: 28.01.88

(30) Priority: 29.01.87 JP 19381/87

(43) Date of publication of application: 03.08.88 Bulletin 88/31

(84) Designated Contracting States: DE FR GB

(71) Applicant: Toray Silicone Company, Ltd.
8, 2-chome Muro-machi Nihonbashi
Chuo-ku Tokyo 103(JP)

(72) Inventor: Akamatsu, Shoji
6, 1-chome, Yushudai Nishi
Ichihara-shi Chiba Prefecture(JP)
Inventor: Masaoka, Hiroshi
6, 1-chome, Yushudai Nishi
Ichihara-shi Chiba Prefecture(JP)
Inventor: Enami, Hiroji
6, 1-chome, Yushudai Nishi
Ichihara-shi Chiba Prefecture(JP)

(74) Representative: Spott, Gottfried, Dr. et al
Sendlinger-Tor-Platz 11
D-8000 München 2(DE)

(54) **Method for preparing urea-functional organosilicon compounds.**

(57) The invention relates to a method for preparing urea-functional organosilicon compounds having the general formula

$$H_2NCONH\ (CH_2CH_2NH)_a\ R^2\ \overset{R^1_b}{\underset{}{Si}}\ (OR^3)_{3-b}$$

wherein said method for preparation is characterized by the reaction of urea with an amino group-containing alkoxysilane having the general formula

$$H_2N\ (CH_2CH_2NH)_a\ R^2\ \overset{R^1_b}{\underset{}{Si}}\ (OR^3)_{3-b}.$$

EP 0 276 860 A2

Xerox Copy Centre

## METHOD FOR PREPARING UREA-FUNCTIONAL ORGANOSILICON COMPOUNDS

The present invention relates to a method for the preparation of urea-functional organosilicon compounds.

Methods known in the art for the preparation of urea-functional organosilicon compounds are as follows: reacting an isocyanate-containing organosilicon compound with ammonia; reacting an amino group-containing organosilicon compound with a carbamate, Japanese Patent Publication Number 46-5303 (5,303/71); and reacting an amino-group containing organosilicon compound with isocycanic acid, Japanese Patent Application Laid Open Number 56-57792 (57,792/81).

However, reaction ammonia with an isocyanate-containing organosilicon compound requires the use of expensive isocyanate-containing organosilicon compounds, and also proceeds from ammonia, thus necessitating the use of specialized production equipment in order to conduct the reaction at low temperatures or elevated pressures. The reaction of amino group-containing organosilicon compounds with a carbamate has the drawback of using exensive carbamate starting materials. Also, since the reaction is reversible, it is dificult to obtain elevated yields. Finally, since isocyanic acid is a gas at room temperature, the reaction of an amino group-containing organosilicon compound with isocyanic acid requires the use of specialized production equipment in order to run the reaction at low temperatures or elevated pressures.

The object of the present invention is to eliminate the above-mentioned problems by providing a method which does not require specialized equipment, and at the same time which does produce a very pure urea-functional organosilicon compound inexpensively, easily, and rapidly.

The aforesaid object is accomplished by a method for the preparation of urea-functional organosilicon compounds of thegeneral formula

$$H_2NCONH\ (CH_2CH_2NH)_a\ R^2\ \overset{R^1{}_b}{\overset{|}{Si}}\ (OR^3)_{3-b}$$

said method is characterized by the reaction of urea with an amino group-containing alkoxysilane of the general formula

$$H_2N\ (CH_2CH_2NH)_a\ R^2\ \overset{R^1{}_b}{\overset{|}{Si}}\ (OR^3)_{3-b}$$

wherein $R^1$ is a monovalent hydrocarbon group having one to six carbon atoms; $R^2$ is a divalent hydrocarbon group having one to six carbon atoms; $R^3$ is an alkyl group having one to four carbon atoms; a is 0, 1, 2, or 3; and b is 0, 1, or 2, in the above formulas.

In explanation of the preceding, the amino group-containing alkoxysilane used as a starting material in the present invention's method of production has the general formula

$$H_2N\ (CH_2CH_2NH)_a\ R^2\ \overset{R^1{}_b}{\overset{|}{Si}}\ (OR^3)_{3-b}$$

In the preceding formula, $R^1$ is a monovalent hydrocarbon group having one to six carbon atoms, and examples thereof are alkyl groups such as methyl, ethyl, propyl, and hexyl; alkenyl groups such as vinyl, allyl, and propenyl; substituted alkyl groups such as 3,3,3-trifluoropropyl; and the phenyl group. $R^3$ is an alkyl group having one to four carbon atoms, as exemplified by methyl, ethyl, normal-propyl, isopropyl, normal-butyl, and isobutyl. $R^2$ is a divalent hydrocarbon group having one to six carbon atoms, and is exemplified by methylene, ethylene, propylene, isobutylene, pentylene, and hexylene. a is 0, 1, 2, or 3, and b is 0, 1, or 2.

The instant amino group-containing alkoxysilane is examplified by aminomethyltrimethoxysilane, aminomethyltriethoxysilane, gamma-aminopropyltrimethoxysilane, gamma-aminopropyltriethoxysilane, gamma-(2-aminoethyl) aminopropyltrimethoxysilane, gamma-(2-aminoethyl) aminopropyltriethoxysilane, gamma-diethylenetriaminopropyltrimethoxysilane, gamme-diethylenetriaminopropyltriethoxysilane, aminomethylmethyldimethoxysilane, aminomethylmethyldiethoxysilane, gamma-aminopropylmethyldimethoxysilane, gamma-aminopropylmethyldiethoxysilane, gamma-(2-aminoethyl) aminopropylmethyldimethoxysilane, gamma-(2-aminoethyl) aminopropylmethyldiethoxysilane, gamma-diethylenetriaminopropylmethyldimethoxysilane, gamma-diethylenetriaminopropylmethyldiethoxysilane, aminomethylmethyldipropoxysilane, aminomethylethyldiethoxysilane, gamma-aminopropylmethyldipropoxysilane, gamma-aminopropylethyldiethoxysilane, gamma-(2-aminoethyl)aminopropylmethyldipropoxysilane, gamma-(2-aminoethyl)aminopropylethyldiethoxysilane, gamma-diethylenetriaminopropylmethyldipropoxysilane, gamma-diethylenetriaminopropylethyldiethoxysilane, gamma-(2-aminoethyl)aminoisobutyltrimethoxysilane and gamma-(2-aminoethyl)-aminoisobutylmethyldimethoxysilane.

Also used as a starting material in the present invention's method of production is urea, which is

reacted with the above amino grop-containing alkoxysilane.

With regard to the amino group-containing alkoxysilane/urea reaction ratio, preferably 0.8 to 3.0 moles amino group-containing alkoxysilane is reacted with 1 mole of urea since 1 mole of urea reacts with 1 mole of amino groups present in the amino group-containing alkoxysilane. No specific restriction is placed on the reaction temperature, but it is generally 70°C to 200°C, and preferably 100°C to 150°C. The reaction is in general conducted at ambient pressure but can be run at elevated or reduced pressures. Ammonia gas is a by-product of the reaction, and must be discharged from the system. A reaction medium can be used as necessary, and such is exemplified by aromatic hydrocarbon solvents, aliphatic hydrocarbon solvents, halogenated hydrocarbon solvents, and ether solvents.

The urea-functional organosilicon compounds made by the production method of the present invention are useful as a resin additive, etc., where the objective is to improve the moisture resistance and improve the physical properties of organic resins through the joint use of siliceous inorganic material, for example, silica, and silane coupling agent or glass-fiber treatment agent.

The present invention will be explained in the following with reference to illustrative examples.

## EXAMPLE 1

60g of urea (1.0 mole) and 222.4g of gamma-aminopropyltriethoxysilane (1.0 mole) were placed in a 500mL four-neck flask equipped with stirrer, reflux condenser, and thermometer, and were then heated to 120 - 130°C using a mantle heater. A reaction was carried out at this temperature with continuous stirring for 2 hours, until the generation of ammonia gas was completed (monitored by observation of a trap filled with liquid paraffin).

Dissolved ammonia was then removed at 80°C/40 mmHg to yield a white, waxy material. This was confirmed to be

$H_2N\text{-}CONH\text{-}CH_2CH_2CH_2\text{-}Si(OC_2H_5)_3$

from the results of infrared absorption analysis, nuclear magnetic resonance spectral analysis, and elemental analysis.

ELEMENTAL ANALYSIS

| | C | H | Si | N |
|---|---|---|---|---|
| calculated value | 45.45 | 9.09 | 10.61 | 10.61 |
| analytical value | 45.43 | 9.10 | 10.58 | 10.60 |

$C^{13}$ NMR: 160ppm (s) =C=O

## EXAMPLE 2

60g of urea (1.0 mole) and 222.1g of gamma-(2-aminoethyl)-aminopropyltrimethoxysilan (1.0 mole) were placed in a 500mL four-neck flask equipped with stirrer, reflux condenser, and thermometer, and were then heated to 110 -120°C using a mantle heater. A reaction was carried out at this temperature with continuous stirring for 1 hour, until the generation of ammonia gas was completed (monitored by observation of a trap filled with liquid paraffin).

Dissolved ammonia was then removed at 80°C/40 mmHg to yield a light yellow, transparent, and viscous liquid. This was confirmed to be

$H_2N\text{-}CONH\text{-}CH_2CH_2\text{-}NH\text{-}CH_2CH_2CH_2\text{-}Si(OCH_3)_3$

from the results of infrared absorption analysis, nuclear magnetic resonance spectral analysis, and elemental analysis.

EXAMPLE 3

60g of urea (1.0 mole) und 265.0g of gamma-diethylenetriaminopropyltrimethoxysilane (1.0 mole) were placed in a 500mL four-neck flask equipped with stirrer, reflux condenser, and thermometer, and were then heated to 120 -130°C using a mantle heater. A reaction was carried out at this temperature with continuous stirring for 1.5 hours, until the generation of ammonia gas was completed (monitored by observation of a trap filled with liquid paraffin).

Dissolved ammonia was then removed at 80°C/40 mmHg to yield a light yellow, transparent, and viscous liquid. This was confirmed to be

$H_2N\text{-}CONH\text{-}CH_2CH_2\text{-}NH\text{-}CH_2\text{-}CH_2\text{-}NH\text{-}CH_2CH_2CH_2\text{-}Si(OCH_3)_3$

from the results of infrared absorption analysis, nuclear magnetic resonance spectral analysis, and elemental analysis.

EXAMPLE 4

60g of urea (1.0 mole) and 278.0g of 2-aminoethylaminomethyltriisopropoxysilane (1.0 mole) were placed in a 500mL four-neck flask equipped with stirrer, reflux condenser, and thermometer, and were then heated to 120 -130°C using a mantle heater. A reaction was carried out at this temperature with continuous stirring for 2 hours, until the generation of ammonia gas was completed (monitored by observation of a trap filled with liquid paraffin).

Dissolved ammonia was then removed at 80°C/40 mmHg to yield a light yellow, transparent, and viscous liquid. This was confirmed to be

$$H_2N\text{-}CONH\text{-}CH_2CH_2\text{-}NHCH_2Si\text{-}(O\overset{CH_3}{\overset{|}{C}}HCH_3)_3$$

from the results of infrared absorption analysis, nuclear magnetic resonance spectral analysis, and elemental analysis.

EXAMPLE 5

60g of urea (1.0 mole) and 206.1g of gamma-(2-aminoethyl)-aminopropylmethyldimethoxysilane (1.0 mole) were placed in a 500mL four-neck flask equipped with stirrer, reflux condenser, and thermometer, and were then heated to 120 - 130°C using a mantle heater. A reaction was carried out at this temperature with continuous stirring for 2 hours, until the generation of ammonia gas was completed (monitored by observation of a trap filled with liquid paraffin).

Dissolved ammonia was then removed at 80°C/40 mmHg to yield a light yellow, transparent, and viscous liquid. This was confirmed to be

$$H_2N\text{-}CONH\text{-}CH_2CH_2\text{-}NH\text{-}CH_2\text{-}CH_2\text{-}CH_2\text{-}\overset{CH_3}{\overset{|}{Si}}(OCH_3)_2$$

from the results of infrared absorption analysis, nuclear magnetic resonance spectral analysis, and elemental analysis.

Because an amino group-containing alkoxysilane is reacted with urea in the present invention's method for the preparation of urea-functional organosilicon compounds, said method characteristically does not require the use of specialized equipment, while producing very pure urea-functional organosilicon compound rapidly, easily, and inexpensively, and so is very useful in the industry.

**Claims**

1. A method for preparing urea-functional organosilicon compounds of the general formula

$$H_2NCONH\,(CH_2CH_2NH)_a\,R^2\,\overset{R^1{}_b}{\overset{|}{Si}}\,(OR^3)_{3\text{-}b}$$

said method being characterized by the reaction of urea with an amino grop-containing alkoxysilane of the general formula

$$N_2N\,(CH_2CH_2NH)_a\,R^2\,\overset{R^1{}_b}{\overset{|}{Si}}\,(OR^3)_{3\text{-}b}$$

wherein $R^1$ is a monovalent hydrocarbon group having one to six carbon atoms; $R^2$ is a divalent hydrocarbon group having one to six carbon atoms; $R^3$ is an alkyl group having one to four carbon atoms; a is 0, 1, 2, or 3; and b is 0, 1, or 2.

2. A method as claimed in claim 1, wherein $R^1$ is selected from the group consisting of methyl, ethyl, propyl, hexyl, vinyl, allyl, propenyl, phenyl and 3,3,3-trifluoropropyl groups, $R^2$ is selected from the group consisting of methylene, ethylene, propylene, isbutylene, octylene and hexylene groups, and $R^3$ is selected from the group consisting of methyl, ethyl, normal-propyl, isopropyl, normal-butyl and isobutyl groups.

3. A method as claimed in claim 2, wherein said amino-group containing alkoxysilane is selected from the group consisting of aminomethyltrimethoxysilane, aminomethyltriethoxysilane, gamma-aminopropyltrimethoxysilane, gamma-aminopropyltriethoxysilane, gamma-(2-amino-ethyl)aminopropyltrimethoxysilane, gamma-(2-aminoethyl) aminopropyltriethoxysilane, gamme-diethylenetriaminopropyltrimethoxysilane, gamma-diethylenetriaminopropyltriethoxysilane, aminomethylmethyldimethoxysilane, aminomethylmethyldiethoxysilane, gamma-aminopropylmethyldimethoxysilane, gamma-aminopropylmethyldiethoxysilane, gamma-(2-aminoethyl)aminopropylmethyldimethoxysilane, gamma-(2-aminoethyl)-4-aminopropylmethyldiethoxysilane, gamma-diethylenetriaminopropylmethyldimethoxysilane, gamme-diethylenetriaminopropylmethyldiethoxysilane, aminomethylmethyldipropoxysilane, aminomethylethyldiethoxysilane, gamma-aminopropylmethyldipropoxysilane, gamma-aminopropylethyldiethoxysilane, gamma-(2-aminoethyl)-aminopropylmethyldipropoxysilane, gamma-(2-aminoethyl)aminopropylethyldiethoxysilane, gamma-diethylenetriaminopropylmethyldipropoxysilane, gamma-diethylenetriaminopropylethyldiethoxysilane, gamma-(2-aminoethyl)aminoisobutyltrimethoxysilane and gamma-(2-aminoethyl)-aminoisubutylmethyldimethoxysilane.

4. A method for preparing urea-functional organosilicon compounds by reacting urea with an amino group-containing alkoxysilane of the general formula

$$H_2N\,(CH_2CH_2NH)_a\,R^2\,\overset{R^1{}_b}{\overset{|}{Si}}\,\,OR^3)_{3-b}$$

wherein $R^1$ is a monovalent hydrocarbon group having one to six carbon atoms; $R^2$ is a divalent hydrocarbon group having one to six carbon atoms; $R^3$ is an alkyl group having one to four carbon atoms; a is 0, 1, 2, or 3; and b is 0, 1, or 2, said method of preparing urea-functional organosilicon comprises reacting said amino group-containing alkoxysilane with urea at a mole ratio of from 0.8-3.0 : 1, at a reaction temperature in the range of from 70-200°C and discharging by-product ammonia gas evolved thereby, producing compounds of the formula

$$H_2NCONH\,(CH_2CH_2NH)_a\,R^2\,\overset{R^1{}_b}{\overset{|}{Si}}\,\,OR^3)_{3-b}$$

wherein $R^1$, $R^2$, $R^3$, a and b are as defined above.

5. A method as claimed in claim 4, wherein said reaction temperature is in the range of from 100-150°C.

6. A method as claimed in claim 4, wherein said amino group-containing alkoxysiloane and urea are reacted in a reaction medium, said reaction medium being selected from the group consisting of araomatic hydrocarbon solvents, aliphatic hydrocarbon solvents and halogenated hydrocarbon solvents.

7. A method as claimed in claim 4, wherein $R^1$ is selected from the group consisting of methyl, ethyl, propyl, hexyl, vinyl, allyl, propenyl, phenyl and 3,3,3-triflouropropyl groups, $R^2$ is selected from the group consisting of methylene, ethylene, propylene, isobutylene, octylene and hexylene groups, and $R^3$ is selected from the group consisting of methyl, ethyl, normal-propyl, isopropyl, normal-butyl and isobutyl groups.

8. A method as claimed in claim 4, wherein said amino-group containg alkoxysilane is selected from the group consisting of aminomethyltrimethoxysilane, aminomethyltriethoxysilane, gamma-aminopropyltrimethoxysilane, gamma-aminopropyltriethoxysilane, gamma-(2-amino-ethyl)aminpropyltrimethoxysilane, gamma-(2-aminoethyl)aminopropyltriethoxysilane, gamma-diethylenetriaminopropyltrimethoxysilane, gamma-diethylenetriaminopropyltriethoxysilane, aminomethylmethyl dimethoxysilane, aminomethylmethyldiethoxysilane, gamma-aminopropylmethyldimethoxysilane, gamma-aminopropylmethyldiethoxysilane, gamma-(2-aminoethyl)aminopropylmethyldimethoxysilane, gamma-(2-aminoethyl)-4-aminopropylmethyldiethoxysilane, gamma-diethylenetriaminopropylmethyldimethoxysilane, gamma-diethylenetriaminopropylmethyldiethoxysilane, aminomethylmethyldipropoxysilane, aminomethylethyldiethoxysilane, gamma-aminopropylmethyldipropoxysilane, gamma-aminopropylethyldiethoxysilane, gamma-(2-aminoethyl)-aminopropylmethyldipropoxysilane, gamma-(2-aminoethyl)aminopropylethyldiethoxysilane, gamma-diethylene-triaminopropylmethyldipropoxysilane, gamma-diethylene-triaminopropylethyldiethoxysilane, gamma-(2-aminoethyl)-aminoisobutyltrimethoxysilane and gamma-(2-aminoethyl)-aminoisobutylmethyldimethoxysilane.